**Europäisches Patentamt**

**European Patent Office**

**Office européen des brevets**

(11) Veröffentlichungsnummer: **0 081 030**
**A2**

# (12) EUROPÄISCHE PATENTANMELDUNG

(21) Anmeldenummer: **82103706.6**

(22) Anmeldetag: **30.04.82**

(51) Int. Cl.³: **B 29 D 27/00**
**B 29 D 3/02**

(30) Priorität: **09.12.81 DE 3148711**

(43) Veröffentlichungstag der Anmeldung:
**15.06.83 Patentblatt 83/24**

(84) Benannte Vertragsstaaten:
**AT BE CH DE FR GB IT LI NL SE**

(71) Anmelder: **Firma Carl Freudenberg**
**Höhnerweg 2**
**D-6940 Weinheim/Bergstrasse(DE)**

(72) Erfinder: **Ebert, Heinrich**
**Marienstrasse 11**
**D-6941 Abtsteinach(DE)**

(72) Erfinder: **Kirsch, Wilhelm**
**Burgacker 4**
**D-6943 Birkenau(DE)**

(74) Vertreter: **Weissenfeld-Richters, Helga, Dr.**
**Höhnerweg 2**
**D-6940 Weinheim/Bergstrasse(DE)**

(54) **Schaumstoffbahn aus einem geschlossenzellig geschäumten Weichkunststoff.**

(57) Schaumstoffbahn aus einem geschlossenzellig geschäumten, vernetzten Polyolefinkörper, der eine Ober- und eine Unterseite aufweist und wobei die Ober- und/oder die Unterseite durch in den Schaumstoffkörper eindringende, musterartig über die Fläche verteilte Kanäle unterbrochen ist, in denen fest Teilchen (7) eingelagert sind.

Fig. 3

EP 0 081 030 A2

DR. H. WEISSENFELD · RICHTERS
PATENTANWÄLTIN

6940 Weinheim**0081030**
Hohnerweg 2 · 4
Telefon 06201 - 80-4494 + 8618
Telex 4 65 531

25. April 1982
Mo/Sch  ON 957/Europa

-1-

Anmelderin: Firma Carl Freudenberg, Weinheim

## Schaumstoffbahn aus einem geschlossenzellig geschäumten Weichkunststoff

Die Erfindung betrifft eine Schaumstoffbahn aus einem geschlossenzellig geschäumten Weichkunststoff, der eine im wesentlichen parallel zu der Oberseite verlaufende Unterseite aufweist.

Schaumstoffbahnen der vorstehend angesprochenen Art sind seit langem bekannt und geläufig. Sie verhalten sich bei Verwendung vernetzter Polyolefine in chemischer Hinsicht vollkommen inert, lassen sich im Anschluß an eine vorausgegangene Erwärmung ausgezeichnet umformen und besitzen neben einem hohen Wärmedämmvermögen eine ausgezeichnete Rückprallelastizität.

Schaumstoffbahnen aus geschlossenzellig geschäumten, vernetzten Polyolefinen haben aufgrund dieser Eigenschaften vielfältige Anwendungen gefunden, beispielsweise im Automobilbau, auf dem Isolationssektor, bei der Herstellung von Spielwaren, Camping- und Sportartikeln, bei der Herstellung von Verpackungen, von Bekleidung und orthopädischen Erzeugnissen, bei der Herstellung von Sitzbezügen, von Haushalts-, Werbe- und Displayartikeln sowie im Bauwesen. Dabei muß allerdings vielfach der Nachteil in Kauf genommen werden, daß die Wärmedurchlässigkeit nur bedingt, die Absorptionsfähigkeit und die Durchlässigkeit für Feuchtigkeit bzw. Luftschall hingegen überhaupt nicht steuerbar sind und nur sehr schlechte Werte aufweisen. Artfremde Substanzen können wegen der geschlossenen Porenstruktur nicht eingelagert werden und bei einer Umformung unter Anwendung von Druck und Wärme ergibt sich häufig eine Verdichtung der Porenstruktur mit nachteiligen Auswirkungen hinsichtlich der ursprünglich eingestellten Eigenschaften der Schaumstoffbahn.

Der Erfindung liegt die Aufgabe zugrunde, eine Schaumstoffbahn zu zeigen, die sich vorteilhaft von einer Ausführung der vorstehend angesprochenen Art unterscheidet. Die vorgeschlagene Schaumstoffbahn soll insbesondere ohne wesentliche Beeinträchtigung der ursprünglich eingestellten Eigenschaften durch die Einwirkung von Druck und Wärme umformbar sein. Die Absorption von Luftschall oder Feuchtigkeit sowie die Durchlässigkeit bei einer entsprechenden Beaufschlagung sollen auf hohe, klar definierte Werte einstellbar sein. Neue Anwendungsbereiche sollen durch die gezielte Einlagerung artfremder Substanzen erschlossen werden.

Zur Lösung dieser Aufgabe wird eine Schaumstoffbahn der eingangs genannten Art vorgeschlagen, die dadurch gekennzeichnet ist, daß die Ober- und/oder die Unterseite durch in die Schaumstoffbahn eindringende, musterartig über die Fläche verteilte Kanäle unterbrochen ist, in denen feste Teilchen eingelagert sind.

Die festen Teilchen sind im wesentlichen nicht kompressibel und untereinander lediglich durch das weichelastische, geschlossenzellig geschäumte, vernetzte Polyolefin verbunden. Sie vermögen insofern nicht eine Umformung unter der Einwirkung von Druck und Wärme zu behindern, bewirken jedoch eine ausgezeichnete Stabilisierung der Raumstruktur des Schaumstoffes, wodurch Veränderungen der Eigenschaften während des Umformens verhindert werden.

Die die Ober- und/oder die Unterseite unterbrechenden Kanäle können nach Art von Sacklöchern senkrecht oder schräg zur Erstreckung in die Schaumstoffbahn eindringen. Sie können diese ganz durchdringen, so daß eine Mündung die Oberseite, die andere Mündung hingegen die Unterseite unterbricht. Sie können auch derart ineinander übergehen, daß jeder Kanal mehrere Mündungen im Bereich der Ober- und/oder der Unterseite aufweist. Die einzelnen Teilkanäle schließen in diesem Falle mit der Erstreckung der Schaumstoffbahn einen spitzen Winkel ein. Effekte, bei denen es auf eine besondere Gestaltung der Oberfläche maßgeblich ankommt, wie beispielsweise die Absorptionsfähigkeit oder Durchlässigkeit gegenüber Luftschall oder Feuchtigkeit, lassen sich hierdurch wesentlich verstärken.

Die Kanäle bestehen vorzugsweise aus kreis- oder polygonförmig begrenzten Löchern, die ohne Entnahme von Werkstoffbestandteilen erzeugt sind. Das Material der Schaumstoffbahn ist in der unmittelbaren Umgebung der Kanäle verdichtet, was die räumliche Festlegung der in den Kanälen enthaltenden, festen Teilchen begünstigt. Die Innenwandung der Kanäle besteht im wesentlichen aus den Wänden der angeschnittenen, kugelförmigen Poren des Schaumstoffes, und sie zeigt eine dementsprechend starke Zerklüftung.

Die nach innen vorspringenden Teile dieser Zellwände weisen eine große Anschmiegsamkeit auf und vermögen in feinste Unregelmäßigkeiten der Oberfläche der festen Teilchen einzudringen. Diese erfahren dadurch eine zusätzliche Sicherung hinsichtlich ihrer Verankerung.

Der Durchmesser der Teilchen kann in einem relativ großen Rahmen frei gewählt werden. Ein mechanisch fester Halt wird bereits dann erzielt, wenn der größte Durchmesser der Teilchen nur geringfügig größer ist als der kleinste Durchmesser der Kanäle. Demgegenüber wird ein noch besserer Sitz erzielt, wenn das Profil der Teilchen etwa demjenigen der Kanäle entspricht, bzw. etwas größer gewählt ist.

Unabhängig von den vorstehend angesprochenen Verankerungsmethoden ist es natürlich auch möglich, die festen Teilchen auf adhäsive Weise mit der Wandung der Kanäle zu verbinden, was beispielsweise durch thermoplastische Erweichung des Weichkunststoffes geschehen kann oder unter Zuhilfenahme eines reaktiven Klebstoffes. In beiden Fällen wird eine besonders gute Homogenität der mechanischen Eigenschaften erzielt.

Die festen Teilchen können solche aus natürlichen Werkstoffen umfassen, beispielsweise aus Holz oder Leder. Beide Werkstoffe haben eine gute Wasseraufnahmefähigkeit, was eine entsprechend ausgebildete Schaumstoffbahn besonders geeignet macht für die Erzeugung hochwertiger Einlegesohlen. Dem gleichen Zweck kann eine Ausführung zugeführt werden, die geruchbindende Aktivkohle in Form von festen Teilchen enthält. Durch die Einlagerung von Sand, von Kreide oder Metall läßt sich das Gewicht wesentlich erhöhen, was beispielsweise in bezug auf die Herstellung von Schalldämmstoffen von großer Bedeutung ist.

Sofern Aktivkohle oder Metall in die Schaumstoffbahn ganz durchdringenden Kanälen angeordnet ist, resultiert außerdem eine gut
leitende elektrische Verbindung zwischen der Ober- und der
Unterseite der Schaumstoffbahn, was diese besonders geeignet
macht für die Herstellung von Teppich- oder Bodenbelagsunterlagen
zur Verwendung in explosionsgefährdeten Räumen.

Die festen Teilchen können auch solche aus synthetischen Werkstoffen umfassen, beispielsweise aus Kunststoff, Seife
oder Korund, was eine entsprechende Schaumstoffbahn geeignet
macht zur Verwendung als Schleifklotz. Dabei ist es ein hervorzuhebender Vorteil, daß die Schaumstoffbahn aufgrund ihrer geschlossenen Porenstruktur Materialabrieb nicht aufzunehmen vermag
und insofern unabhängig von der Beaufschlagung eine stets gleichbleibende Flexibilität und Elastizität aufweist. Die Einlagerung
von Zellstoff oder von Teilchen mit einer offenen Porenstruktur
verbessert das Absorptionsvermögen für Feuchtigkeit. Im letztgenannten Falle ergibt sich außerdem eine Steigerung des Schallabsorptionsgrades.

Die festen Teilchen können aus verschiedenen Einzelteilen zusammengesetzt sein, beispielsweise auch aus Werkstoffen einer
unterschiedlichen Gattung, und weisen in diesen Fällen zumeist
eine reliefartig strukturierte Oberfläche auf, was die räumliche
Festlegung in den Kanälen begünstigt. Eine glatte Oberfläche,
insbesondere im Bereich der Mündung, kann demgegenüber zu einem
verbesserten Gleitverhalten beitragen, wenn die Schaumstoffbahn
intensiv dreidimensional umgeformt wird.

Säulenförmig ausgebildete Teilchen stabilisieren den Verlauf der Kanäle und dementsprechend die Schaumstoffbahn entlang ihrer jeweiligen Erstreckung. Die senkrechte Einlagerung empfiehlt sich beispielsweise in Schaumstoffbahnen, die während der Benutzung einer höheren Oberflächenbelastung durch Zug- oder Druckkräfte unterliegen.

Die festen Teilchen können aus Fasern oder Fäden bestehen, wobei unter letzteren eine größere Gruppe einzelner Fasern verstanden wird, die untereinander verflochten, verzwirnt oder verklebt sind. Die einzelne Faser kann eine Vielzahl mehr oder weniger lose verbundener Filamente enthalten.

Die Fasern und/oder die Fäden können Endungen aufweisen, die die Mündungen der Kanäle überragen. Die Endungen stehen in einer guten Wechselwirkung zu der Umgebung, und Luftschall und Feuchtigkeit werden bevorzugt absorbiert bzw. abgeleitet. Dies ist insbesondere dann der Fall, wenn die einzelnen Filamente bzw. Fasern einen möglichst gleichmäßigen Abstand voneinander haben, und beispielsweise einen mehr oder weniger geschlossenen Flor bilden. Sofern Fäden zur Anwendung kommen, sollten die Enden möglichst büschelartig aufgelockert sein.

Die Endungen können untereinander und/oder mit der Schaumstoff-bahn verbunden sein, beispielsweise durch eine gegenseitige Verklebung. Sie können in ein Vlies, einen Vliesstoff, ein Gewebe, ein Gewirke und/oder eine Folie eingebunden sein und mit dem Flächengebilde zusammen eine Einheit bilden.

In Fällen, in denen Fasern und/oder Fäden zur Anwendung kommen, die ein- oder mehrfach gekräuselt sind, ergibt sich eine vergrößerte Porenstruktur und demzufolge ein verbessertes Saug- bzw. Schallabsorptionsvermögen.

In Fällen, in denen es ausschließlich auf eine Verbesserung der mechanischen Eigenschaften der Schaumstoffbahn während der Umformung ankommt, kann es zweckmäßig sein, die Mündungen der Kanäle nach dem Eindringen der festen Teilchen wieder zu verschließen. Eine die mechanischen Eigenschaften der Schaumstoffbahnen nachträglich beeinträchtigende Einlagerung von Fremdstoffen wird hierdurch unterbunden.

Die vorgeschlagene Schaumstoffbahn kann aus einem geschlossenzellig geschäumten, vernetzten Polyäthylen, einem geschlossenzellig geschäumten, vernetzten Polypropylen oder einem Verschnitt aus beiden Werkstoffen bestehen. Polypropylen zeichnet sich neben einer verbesserten Temperaturbeständigkeit durch eine größere Härte gegenüber Polyäthylen aus, dieses besitzt jedoch ein besseres Absorptionsvermögen für Luftschall. In Abhängigkeit von dem vorgesehenen Verwendungszweck ist es deshalb unerläßlich, eine fachkundige Auswahl zu treffen. Soweit es sich um Weichkunststoffe handelt, können alle bekannten polymeren Werkstoffe zur Anwendung kommen, beispielsweise durch eine Polykondensation, eine Polymerisation oder Polyaddition erhältlichen Produkte. Besonders geeignet sind neben Polyvinylchlorid noch Äthylen-Vinyl-Acetat. Durch die jeweilige Auswahl ist es somit möglich, die mechanische, die elektrische und die optische Eigenschaft gezielt zu modifizieren. Zugfestigkeit, E-Modul, Formbeständigkeit, Warmformverhalten und Isolierwirkung können exakt eingestellt werden. Auf die Oberfläche kann eine undurchlässige, dünne Folie zum nachträglichen Verschließen der Mündung der Kanäle aufkaschiert werden, wodurch bei guter Schallabsorption das Eindringen von Feuchtigkeit verhindert wird. Die Folie soll aus einem biegeweichen Werkstoff bestehen und eine Dicke von nicht mehr als 3o $\mu$ aufweisen.

Die vorgeschlagene Schaumstoffbahn kann durch die Einlagerung bestimmter Mengen von festen Teilchen einer bestimmten Art, einer bestimmten Größe und einer bestimmten gegenseitigen Zuordnung nachträglich wesentlich in ihren Eigenschaften modifiziert werden. Es ist dabei ein hervorzuhebender Vorteil, daß diese nachträgliche Modifizierung ohne besonders großen technischen Aufwand möglich ist und zu definierten Eigenschaften führt, die jederzeit reproduzierbar sind.

Der Gegenstand der vorliegenden Erfindung wird anhand der in der Anlage beigefügten Zeichnung nachfolgend weiter erläutert:

Es zeigen:

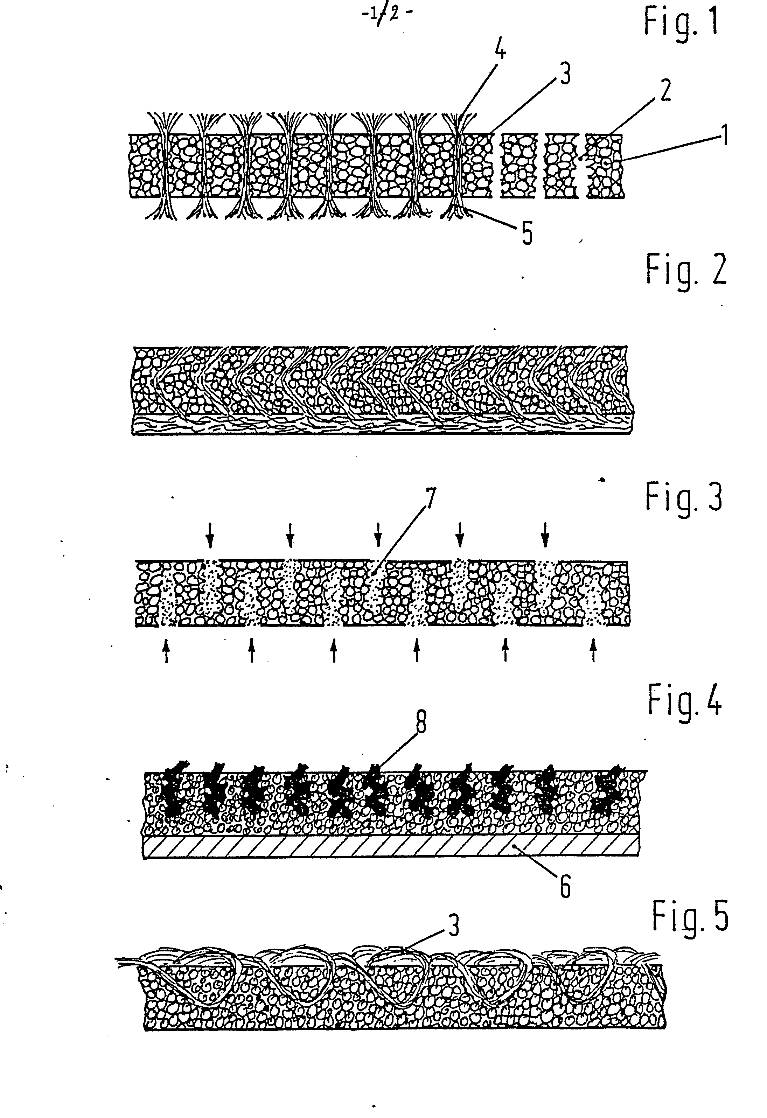

Figur 1 eine Schaumstoffbahn aus einem geschlossenzellig geschäumten, vernetzten Polyolefin, die von musterartig verteilten Kanälen ganz durchdrungen ist und wobei in den Kanälen Fäden mit über die Ober- und über die Unterseite überstehenden Endungen enthalten sind.

Figur 2 eine Schaumstoffbahn entsprechend Figur 1, bei der die die Ober- und die die Unterseite unterbrechenden Kanäle einander zugeordnet und unter einem spitzen Winkel in das Innere der Schaumstoffbahn eindringen, wo sie ineinander übergehen. In den Kanälen sind Faserbündel enthalten, die in ein auf der Unterseite angeordnetes, textiles Flächengebilde eingebunden sind.

Figur 3 eine Schaumstoffbahn aus einem geschlossenzellig geschäumten, vernetzten Polyolefin, bei der die Ober- und die Unterseite jeweils von musterartig verteilten, senkrecht in die Schaumstoffbahn eindringenden, sacklochartig ausgebildeten Kanälen unterbrochen sind. Die Kanäle haben keine gegenseitige Verbindung, und sie sind mit einem Pulver aus einem mineralischen Werkstoff gefüllt.

Figur 4 zeigt eine Ausführung ähnlich Figur 3, wobei jedoch nur die Oberseite von senkrecht eindringenden, musterartig über die Fläche verteilten, sacklochartig ausgebildeten Kanälen unterbrochen ist. Die Kanäle sind mit unregelmäßig geformten Körpern aus einem abrasiven Werkstoff gefüllt. Auf die Unterseite ist eine Verstärkungsschicht aufkaschiert.

Figur 5  eine Ausführung ähnlich Figur 4, wobei jedoch jeweils zwei der die Oberseite der Schaumstoffbahn musterartig unterbrechenden Kanäle im Inneren der Schaumstoffbahn ineinander übergehen. In den Kanälen sind Fäden mit aus den Mündungen herausragenden Endungen enthalten, die gleichsinnig nach links umgelegt und mit der Oberseite der Schaumstoffbahn verklebt sind.

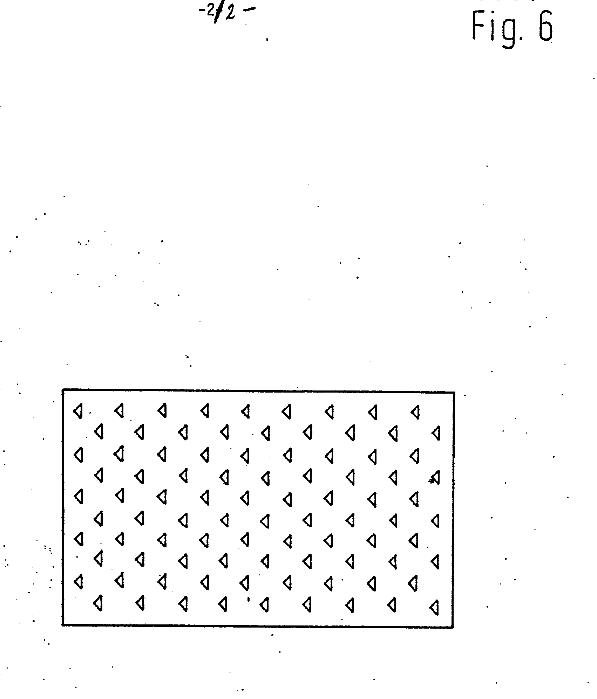

Figur 6  die Oberseite einer Schaumstoffbahn zur Verdeutlichung einer möglichen gegenseitigen Zuordnung der Lage der einzelnen Kanäle.

Die Schaumstoffbahn gemäß Figur 1 besteht aus einem geschlossenzellig geschäumten, vernetzten Polyäthylen mit einem Raumgewicht von 7o kg/m$^3$. Die Dicke beträgt 1o mm.

Die Schaumstoffbahn ist von den musterartig über die gesamte Oberfläche gleichmäßig verteilten, senkrechten Kanälen 2 ganz durchdrungen. Diese haben ein im Bereich der Ober- und im Bereich der Unterseite erkennbares, kreisförmiges Profil und einen gegenseitigen Mittelpunktsabstand von 2 mm.

In den Kanälen sind Fäden unter einer elastischen Vorspannung der Schaumstoffbahn eingeklemmt, die einen Durchmesser von o,7 mm haben. Aus den Mündungen der Kanäle ragen die Endungen 4 und 5 der Fäden heraus, die im vorspringenden Teil büschelartig aufgelockert sind und der Ober- und der Unterseite einen florartigen Ausdruck verleihen. Die Fäden bestehen aus Baumwolle und haben ein dementsprechend hohes Saugvermögen.

Die Fäden wurden zur Verdeutlichung des Profils der Kanäle im rechten Teil der Darstellung weggelassen.

Es ist deutlich erkennbar, daß die seitlichen Wandungen der
Kanäle durch die Zellwände der angeschnittenen Poren gebildet
werden und dementsprechend stark zerklüftet sind. Senkrecht in
das Innere des Querschnittes vorspringende, lamellenartige
Wandungsbestandteile liegen nach dem Eindringen der Fäden unter
einer elastischen Vorspannung auf deren Oberfläche auf und bewirken eine gute geometrische Festlegung.

Die die Schaumstoffbahn gemäß Figur 2 durchdringenden Kanäle sind
etwa in der Mitte der Schaumstoffbahn unter einem rechten Winkel
abgeknickt und enthalten Bündel aus Polypropylenfasern, die in
ein auf die Unterseite aufgelegtes Vlies eingebunden sind. Das
Vlies besteht ebenfalls aus Polypropylenfasern, und hat bei einem
Flächengewicht von 150 g/m$^2$ eine Dicke von 3 mm. Es zeichnet sich
bei einer guten Sprungelastizität durch eine völlige Bindemittelfreiheit aus.

Die Feuchtigkeitsaufnahmefähigkeit von Polypropylen ist vernachlässigbar gering. Dennoch weist eine Schaumstoffbahn gemäß
Figur 2 infolge der zwischen den einzelnen Polypropylenfasern
wirksamen Kapillaraktivität eine gute Durchlässigkeit für Wasserdampf auf. Das Porensystem der auf der Unterseite angeordneten
Vliesschicht ist unmittelbar mit demjenigen der in den Kanälen
enthaltenen Fasern verbunden. Sowohl hinsichtlich der Aufnahme
als auch hinsichtlich der Abgabe von Wasserdampf je Zeiteinheit
weist infolgedessen die Unterseite eine größere Kapazität auf
als die Oberseite. Aufgenommene Feuchtigkeit wird bevorzugt in
diesem Bereich gespeichert. Beispielsweise eine entsprechend
ausgebildete Einlegesohle weist dadurch auch nach längerem
Gebrauch eine trocken erscheinende Oberfläche auf und die aufgenommene Feuchtigkeit kann nach dem Herausnehmen der Einlegesohle aus dem Schuh in kurzer Zeit über die freie Unterseite
verdunsten.

Die Ausführung gemäß Figur 3 zeigt eine Schaumstoffbahn aus einem geschlossenzellig geschäumten, vernetzten Polyäthylen mit einer Dicke von 15 mm. Ober- und Unterseite der Schaumstoffbahn sind durch abwechselnd senkrecht eindringende, sacklochartig ausgebildete Kanäle unterbrochen. Das geschlossene Ende dieser Kanäle hat jeweils einen Abstand von 1,5 mm von der gegenüberliegenden Seite. Die Kanäle haben ein an der Mündung erkennbares, kreisförmiges Profil mit einem Durchmesser von 3 mm. Der gegenseitige Mittelpunktsabstand beträgt 12 mm.

Die Kanäle sind mit Bariumsulfat gefüllt, wodurch die Schaumstoffbahn ein hohes Gewicht von 650 $g/m^2$ aufweist. Die Schaumstoffbahn eignet sich ausgezeichnet als Schalldämm-Matte.

Figur 4 zeigt eine Schaumstoffbahn ähnlich Figur 3 mit dem Unterschied, daß der Schaumstoff ein geschlossenzellig geschäumtes, vernetztes Polypropylen mit einem Raumgewicht von 150 $kg/m^3$ ist. Die Dicke beträgt 10 mm, und die Mündungen der Kanäle sind ausschließlich nebeneinanderliegend auf der Oberseite angeordnet. In den Kanälen sind exakt an das Innenprofil angepaßte Körper aus Korund angeordnet, die reliefartig an den Mündungen vorstehen. Die Unterseite der Schaumstoffbahn ist auf ein Trägerblech 6 aufkaschiert, das eine erleichterte Handhabung bei der Verwendung als Schleifklotz ermöglicht.

Die Ausführung gemäß Figur 5 besteht aus einer Bahn aus einem geschlossenzellig geschäumten, vernetzten Polyäthylen mit einem Raumgewicht von 90 $kg/m^3$. Die Dicke beträgt 8 mm, und die der Oberseite zeigt die Mündungen von im Inneren der Schaumstoffbahn ineinander übergehenden Kanälen. In den Kanälen sind Bündel aus gekräuselten Polyesterfasern enthalten, die einen Durchmesser von 3 mm haben, und deren Endungen über die Mündungen überstehen und gleichsinnig nach links umgelegt und mit der Oberseite verklebt sind.

Das Material ist verrottungsfest, hat eine textilartige weiche
Oberfläche und eine gute Wasseraufnahmefähigkeit. Es eignet sich
aus diesem Grunde ausgezeichnet zur Herstellung hochwertiger
Einlegesohlen.

Figur 6 zeigt die Oberseite einer Schaumstoffbahn, die durch eine
Vielzahl voneinander musterartig zugeordneten Kanalmündungen
unterbrochen ist. Das Profil ist dreieckig ausgebildet, jedoch
nur im Bereich der eigentlichen Mündung der Kanäle klar erkennbar,
weil hier die Schaumstoffbahn einheitlich folienartig abgeschlossen
ist. Im Inneren weist das Profil demgegenüber eine ähnliche Zerklüftung auf wie im rechten Teil der Figur 1 angedeutet.

Patentansprüche

1. Schaumstoffbahn aus einem geschlossenzellig geschäumten, vernetzten Polyolefinkörper, der eine Ober- und eine Unterseite aufweist, dadurch gekennzeichnet, daß die Ober- und/oder die Unterseite durch in den Schaumstoffkörper (1) eindringende, musterartig über die Fläche verteilte Kanäle (2) unterbrochen ist, in denen feste Teilchen (3, 7, 8) eingelagert sind.

2. Schaumstoffbahn nach Anspruch 1, dadurch gekennzeichnet, daß die die Ober- und/oder die die Unterseite unterbrechenden Kanäle ineinander übergehen.

3. Schaumstoffbahn nach Anspruch 1 bis 2, dadurch gekennzeichnet, daß die Kanäle (2) senkrecht zur Ober- und/oder Unterseite angeordnet sind.

4. Schaumstoffbahn nach Anspruch 1 bis 3, dadurch gekennzeichnet, daß die Kanäle (2) mit der Ober- und/oder der Unterseite einen spitzen Winkel einschließen.

5. Schaumstoffbahn nach Anspruch 1 bis 4, dadurch gekennzeichnet, daß die Kanäle (2) aus an der Mündung kreis- oder polygonförmig begrenzten Löchern bestehen.

6. Schaumstoffbahn nach Anspruch 1 bis 5, dadurch gekennzeichnet, daß der gegenseitige Achsabstand der Kanäle wenigstens so groß ist wie der Durchmesser der Teilchen, gemessen in gleicher Richtung, jedoch nicht größer als die doppelte Dicke der Schaumstoffbahn.

7. Schaumstoffbahn nach Anspruch 1 bis 6, dadurch gekennzeichnet, daß die festen Teilchen unter einer elastischen Vorspannung an der Wandung der Kanäle anliegen.

8. Schaumstoffbahn nach Anspruch 7, dadurch gekennzeichnet, daß die festen Teilchen mit der Wandung der Kanäle verklebt sind.

9. Schaumstoffbahn nach Anspruch 1 bis 8, dadurch gekennzeichnet, daß die festen Teilchen solche aus einem natürlichen Werkstoff umfassen, beispielsweise aus Holz, Leder, Aktivkohle, Sand, Kreide, Metall,Baum- oder Schafwolle.

1o. Schaumstoffbahn nach Anspruch 1 bis 9, dadurch gekennzeichnet, daß die festen Teilchen solche aus einem synthetisch hergestellten Werkstoff umfassen, beispielsweise aus Kunststoff, Seife, Korund oder Zellstoff.

11. Schaumstoffbahn nach Anspruch 1 bis 1o, dadurch gekennzeichnet, daß die festen Teilchen im wesentlichen kugelförmig ausgebildet sind.

12. Schaumstoffbahn nach Anspruch 1 bis 1o, dadurch gekennzeichnet, daß die festen Teilchen säulenförmig ausgebildet sind.

13. Schaumstoffbahn nach Anspruch 1 bis 12, dadurch gekennzeichnet, daß die festen Teilchen eine glatte oder reliefartig strukturierte Oberfläche aufweisen.

14. Schaumstoffbahn nach Anspruch 1 bis 13, dadurch gekennzeichnet, daß die festen Teilchen aus Fasern und/oder Fäden bestehen.

15. Schaumstoffbahn nach Anspruch 14, dadurch gekennzeichnet, daß die Fasern und/oder Fäden Endungen aufweisen, die die Mündungen der Kanäle überragen.

16. Schaumstoffbahn nach Anspruch 15, dadurch gekennzeichnet, daß die Endungen untereinander und/oder mit der Schaumstoffbahn verbunden sind.

17. Schaumstoffbahn nach Anspruch 14 bis 16, dadurch gekennzeichnet, daß die Endungen in ein Vlies, einen Vliesstoff, ein Gewebe, ein Gewirke und/oder eine Folie eingebunden sind.

18. Schaumstoffbahn nach Anspruch 14 bis 17, dadurch gekennzeichnet, daß die Fasern und/oder die Fäden ein- oder mehrfach gekräuselt sind.

19. Schaumstoffbahn nach Anspruch 1 bis 18, dadurch gekennzeichnet, daß die Teilchen aus einem feuchtigkeits- und/oder luftschallabsorbierenden Material bestehen.

2o. Schaumstoffbahn nach Anspruch 1 bis 14, dadurch gekennzeichnet, daß die Mündungen der Kanäle verschlossen sind.

0081030

Fig. 1

Fig. 2

Fig. 3

Fig. 4

Fig. 5

Fig. 6